# FASCICULE DE BREVET EUROPEEN

(11) **EP 1 801 620 B1**
(45) Date de publication et mention de la délivrance du brevet: **16.02.2011**
(21) Numéro de dépôt: 06292009.5
(22) Date de dépôt: 21.12.2006
(51) Int. Cl.: G02B 1/10, G02C 7/02, G02C 7/10, C23C 16/00, G02B 5/22

(54) **Installation et procédé de revêtement pour lentille ophtalmique**
Einrichtung und Beschichtungsmethode für Kontaktlinsen
Installation and coating method for ophthalmic lens

(30) Priorité: 23.12.2005 FR 0513268
(43) Date de publication de la demande: 27.06.2007
(73) Titulaire: ESSILOR INTERNATIONAL (COMPAGNIE GENERALE D'OPTIQUE), 94220 Charenton-le-Pont (FR)
(72) Inventeur: Darmes, Daniel Essilor Int., 94220 Charenton Le Pont (FR); Felten, Yohann Essilor Int., 94220 Charenton Le Pont (FR); Lesartre, Noémie Essilor Int., 94220 Charenton Le Pont (FR); Menges, Gilles Essilor Int., 94220 Charenton Le Pont (FR); Rychel, Dominique Essilor Int., 94220 Charenton Le Pont (FR)
(74) Mandataire: Lepelletier-Beaufond, François

(56) Documents cités:
- EP-A- 0 267 679
- EP-A- 0 547 312
- WO-A-00/14295
- US-A- 5 097 136
- PATENT ABSTRACTS OF JAPAN vol. 2003, no. 12, 5 décembre 2003 (2003-12-05) & JP 2004 255330 A (TOKUYAMA CORP), 16 septembre 2004 (2004-09-16)
- PATENT ABSTRACTS OF JAPAN vol. 2003, no. 12, 5 décembre 2003 (2003-12-05) & JP 2004 290857 A (TOKUYAMA CORP), 21 octobre 2004 (2004-10-21)

## Description

L'invention concerne le domaine de la fabrication des lentilles ophtalmiques.

L'invention concerne plus particulièrement une installation et un procédé permettant la dépose d'un revêtement sur une lentille ophtalmique puis la polymérisation de ce revêtement.

Pour la fabrication d'une paire de lunettes, une lentille ophtalmique est tout d'abord produite, généralement par moulage ou par usinage, puis cette lentille ophtalmique subit une opération de détourage consistant à l'usiner par sa tranche pour que son contour corresponde aux cercles de la monture de la lunette dans laquelle la lentille ophtalmique doit être montée.

Avant ou après l'opération de détourage, un ou plusieurs revêtements peuvent être appliqués sur les faces de la lentille ophtalmique afin de conférer à cette dernière des propriétés telles que, par exemple, antireflet, antichoc, anti-rayure, ou encore filtrage des rayons ultraviolets.

Certaines techniques d'application de ces revêtements consistent en l'application sur une face de la lentille ophtalmique du revêtement à l'état liquide, puis en la polymérisation de ce revêtement en exposant la lentille ophtalmique à une source de rayonnement adaptée à durcir le revêtement. Lorsque le revêtement est sensible notamment aux gaz présents dans l'atmosphère, il peut être nécessaire de placer la lentille ophtalmique munie de son revêtement à l'état liquide sous atmosphère inerte avant et/ou pendant sa polymérisation.

On connaît du document JP 2004 255330 un dispositif et un procédé comportant une chambre de réserve, une chambre de polymérisation communiquant de manière étanche avec la chambre de réserve, et une unité de convoyage disposée à l'intérieur de la chambre de réserve et permettant de déplacer une lentille ophtalmique entre la chambre de réserve et la chambre de polymérisation en maintenant ces deux chambres, qui forment ensemble une enceinte étanche, sous atmosphère contrôlée.

Par ailleurs, le document JP 2004 290857 décrit un dispositif de revêtement comportant un plateau rotatif muni de plusieurs supports de lentille, un poste de dépose de revêtement, et un poste de polymérisation. Ces deux postes sont mobiles verticalement par rapport au plateau rotatif de sorte qu'une lentille montée sur l'un des supports de lentille peut être présentée au poste de dépose pour y recevoir le revêtement à l'état liquide puis, après rotation du plateau, la lentille est présentée au poste de polymérisation qui comporte une source d'irradiation, une chambre préliminaire et une chambre d'irradiation, chacune de ces chambres pouvant être hermétiquement close et l'atmosphère de ces chambres pouvant être contrôlée.

Le but de l'invention est d'améliorer le dépôt de ce type de revêtement sur les lentilles ophtalmiques.

A cet effet, l'invention vise une installation adaptée au revêtement de lentilles ophtalmiques, comportant un poste de dépose de revêtement, un poste de polymérisation, des moyens pour déplacer les lentilles ophtalmiques du poste de dépose de revêtement au poste de polymérisation, et des moyens pour créer une atmosphère de gaz inerte autour des lentilles ophtalmiques, caractérisé en ce que les moyens pour créer une atmosphère de gaz inerte comportent des moyens pour l'injection temporaire de gaz inerte ; et au moins un boîtier individuel et autonome muni d'une fenêtre et comportant des moyens de réception d'un support portant une lentille ophtalmique, et des moyens d'étanchéité adaptés à former autour de la lentille ophtalmique une enceinte étanche, cette enceinte comportant un organe d'admission antiretour adapté à coopérer avec les moyens pour l'injection temporaire de gaz inerte.

Une telle installation permet à la lentille ophtalmique, immédiatement après le dépôt du revêtement fluide, d'être confinée dans une atmosphère contrôlée qui suivra la lentille dans ses déplacements, cette dernière ne sortant de l'atmosphère contrôlée qu'une fois la polymérisation terminée. Cette enceinte formée autour de la lentille étant autonome et n'ayant d'autre référence que la lentille elle-même, l'atmosphère contrôlée devient indépendante d'un quelconque disfonctionnement des machines de dépose de revêtement, de polymérisation ou encore de convoyage.

L'invention permet également de contrôler le volume et la composition du gaz inerte disposé à l'intérieur de l'enceinte autonome, ce qui permet une reproductibilité d'une lentille à l'autre des conditions de fabrication.

Une telle enceinte autonome permet de plus d'extraire une lentille ophtalmique de la chaine de fabrication pour, par exemple, la mettre en attente, tout en maintenant la lentille ophtalmique sous atmosphère contrôlée. Par exemple, la fabrication des lentilles ophtalmiques peut être rendue plus flexible en déposant le revêtement sur un certain nombre de lentilles ophtalmiques disposées ensuite chacune dans leur enceinte autonome respective, en stockant ces enceintes puis en les polymérisant toutes d'un seul coup dans un dispositif de polymérisation dépourvu d'atmosphère contrôlée dans la mesure où chacune des lentilles est associée à sa propre atmosphère contrôlée.

La possibilité de déplacer chaque lentille avec son atmosphère contrôlée associée permet donc de rendre la fabrication des lentilles plus souple et indépendante des installations d'atmosphère contrôlée associées aux différents postes de fabrication.

Selon une caractéristique préférée, l'enceinte comporte en outre un organe d'échappement antiretour permettant au gaz présent dans l'enceinte de sortir au fur et à mesure que le gaz inerte est injecté.

Cet organe d'échappement antiretour, de même que l'organe d'admission antiretour, peuvent comporter un joint de type bec de canard.

Selon une caractéristique préférée, les moyens pour l'injection temporaire de gaz inerte comportent un raccord relié à une source de gaz inerte.

Dans un mode de réalisation, l'enceinte est formée par l'association du boîtier et d'un socle.

Les moyens de réception peuvent alors comporter un pion disposé sur le socle.

Les moyens d'étanchéité peuvent également comporter un joint torique disposé entre le boîtier et le socle.

Une charnière peut de plus être prévue pour articuler le boîtier et le socle, ainsi que des aimants, ou des pinces du type pinces sauterelles, pour maintenir le boîtier contre le socle.

En variante, l'enceinte est formée par la coopération directe du boîtier et du support.

Les moyens d'étanchéité peuvent alors comporter un joint disposé entre le boîtier et le support.

Le boîtier peut par ailleurs comporter un déflecteur disposé en vis-à-vis de l'organe d'admission antiretour pour casser le jet de gaz inerte.

Selon d'autres caractéristiques préférées :
- la fenêtre est adaptée à filtrer les rayons UVB ; et
- le support portant la lentille ophtalmique permet également de maintenir la lentille ophtalmique au poste de dépose de revêtement, ce qui permet à la lentille d'être montée sur le même support tout au long du procédé de revêtement.

Selon un autre objet, l'invention vise un procédé de revêtement d'une lentille ophtalmique, comportant les étapes suivantes:
- disposer une lentille ophtalmique sur un support;
- déposer sur la lentille ophtalmique un revêtement devant être polymérisé sous atmosphère contrôlée ;
- placer la lentille ophtalmique dans une atmosphère de gaz inerte ;
- polymériser ledit revêtement ;
caractérisé en ce que l'étape de disposer la lentille ophtalmique dans une atmosphère de gaz inerte est réalisée selon les étapes suivantes :
- associer le support à un boîtier individuel et autonome muni d'une fenêtre et comportant : des moyens de réception d'un support portant une lentille ophtalmique, et des moyens d'étanchéité pour former autour de la lentille ophtalmique une enceinte étanche, cette enceinte comportant un organe d'admission antiretour adapté à coopérer avec des moyens pour l'injection temporaire de gaz inerte ;
- brancher l'enceinte à des moyens pour l'injection temporaire de gaz inerte par l'intermédiaire de l'organe d'admission antiretour ;
- injecter du gaz inerte dans l'enceinte;
- débrancher l'enceinte des moyens pour l'injection temporaire de gaz inerte.

Le procédé procure les mêmes avantages que l'installation.

D'autres caractéristiques et avantages de l'invention apparaissent à la lumière de la description qui va suivre d'un mode de réalisation préféré donné à titre d'exemple non limitatif, description faite en référence aux dessins annexés, dans lesquels :
- la figure 1 est une vue schématique d'une installation selon l'invention ;
- la figure 2 représente en perspective l'une des enceintes individuelles et autonomes employées par l'installation de la figure 1, l'enceinte étant fermée ;
- les figures 3 et 4 montrent en perspective l'enceinte de la figure 2 en position ouverte ;
- la figure 5 est une vue de dessus du corps de l'enceinte des figures 2 à 4;
- la figure 6 est une vue selon la coupe VI-VI de la figure 5 ;
- la figure 7 est une vue de dessus du socle de l'enceinte des figures 2 à 4;
- la figure 8 est une vue selon la coupe VIII-VIII de la figure 5 ;
- la figure 9 est une vue schématique en coupe d'une enceinte individuelle et autonome selon une variante de l'invention ;
- la figure 10 représente en perspective un poste d'injection de gaz inerte adapté à coopérer avec l'enceinte des figures 2 à 4 ;
- la figure 11 représente en perspective le poste d'injection de la figure 9 coopérant avec l'enceinte individuelle et autonome des figures 2 à 4.

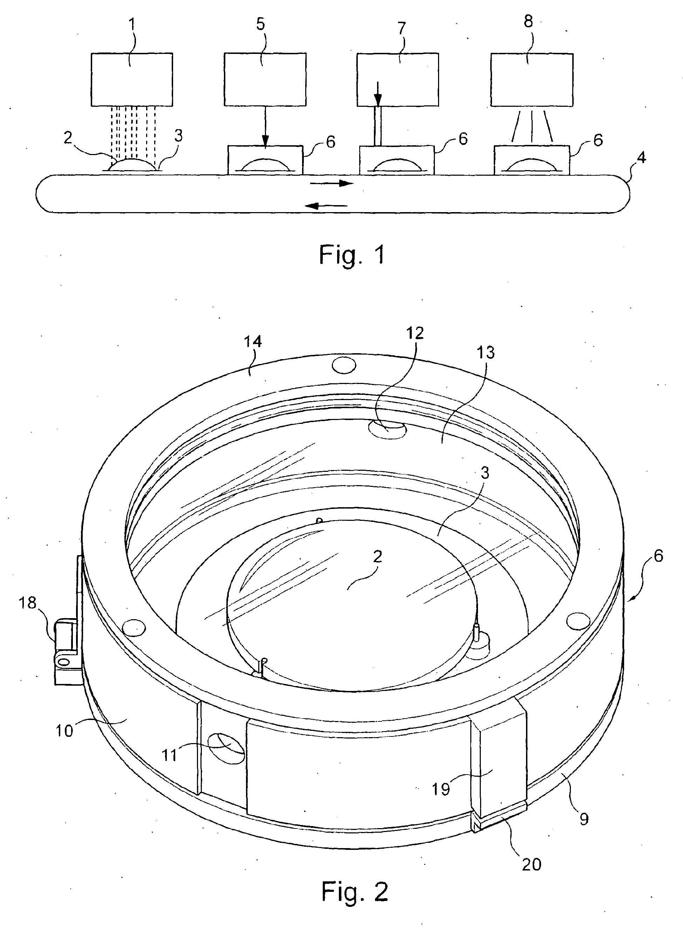

L'installation représentée schématiquement à la figure 1 permet d'appliquer un revêtement à des lentilles ophtalmiques. Cette installation comporte un poste de dépose 1 permettant de déposer un revêtement à l'état liquide sur une lentille ophtalmique 2 montée sur un support 3. Ce poste de dépose 1 est avantageusement du type « spin », c'est-à-dire adapté à déposer sur la lentille ophtalmique un revêtement à l'état liquide et d'entraîner en rotation le support 3 afin que la force centrifuge répartisse le revêtement sur la surface de la lentille ophtalmique 2.

L'ensemble formé par la lentille ophtalmique 2 et son support 3 est ensuite déplacé, par exemple, grâce à un tapis de convoyage 4, vers un poste d'association 5 adapté à associer le support 3 muni de la lentille 2 à un boîtier 6 individuel et autonome. L'ensemble est ensuite déplacé jusqu'à un poste d'injection 7 adapté à injecter dans le boîtier 6 un gaz inerte.

L'ensemble est finalement déplacé jusqu'à un poste de photopolymérisation 8 adapté à irradier la lentille ophtalmique contenue dans le boîtier 6 pour réaliser la polymérisation du revêtement. Au cours de la polymérisation, le revêtement durcit et devient stable et la lentille ophtalmique peut ensuite être séparée du boîtier 6 pour poursuivre le procédé classique de fabrication d'une lentille ophtalmique adaptée à une monture de lunette particulière.

La figure 2 représente en perspective l'ensemble formé par le support 3 muni de la lentille 2 et du boîtier 6.

Le boîtier 6 forme avec un socle 9 une enceinte étanche, autonome et individuelle.

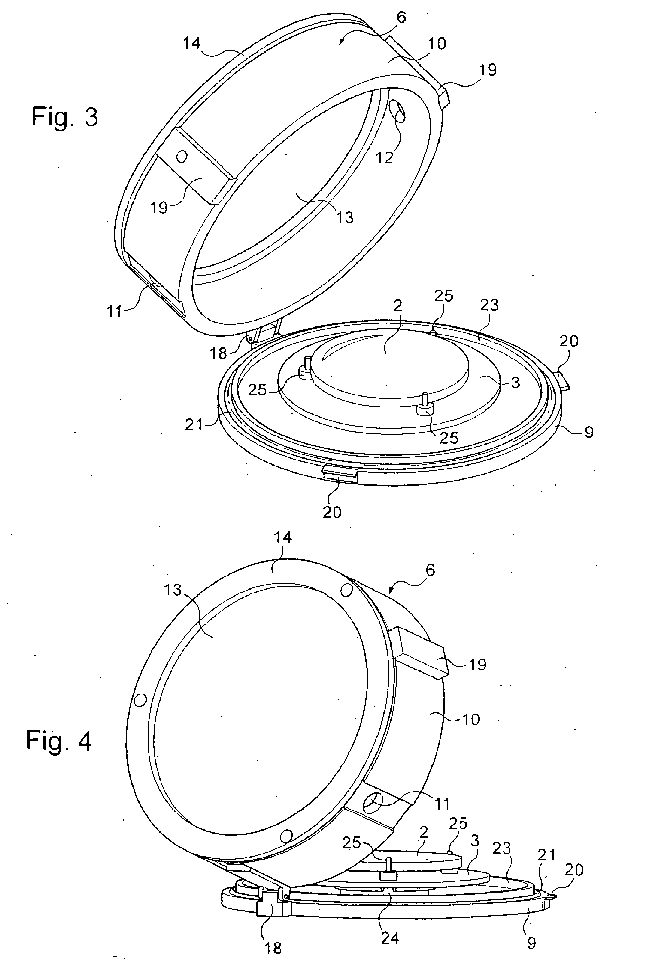

Cette enceinte est représentée ouverte aux figures 3 et 4.

Le boîtier 6 est formé d'un corps cylindrique 10 comportant un orifice d'injection 11 et un orifice d'échappement 12.

L'une des extrémités du corps 10 est fermée par une fenêtre 13 montée contre le corps 10 grâce à une bride 14. La fenêtre 13 est constituée par exemple d'un disque de verre, de plexiglas, ou de tout autre polymère éventuellement choisi pour filtrer certains rayons lumineux. Dans le présent exemple, la fenêtre 13 laisse passer les rayons UVA et filtre les rayons UVB.

La bride 14 maintient la fenêtre 13 contre le corps 10 de manière étanche, grâce à un joint d'étanchéité (non visible sur les figures).

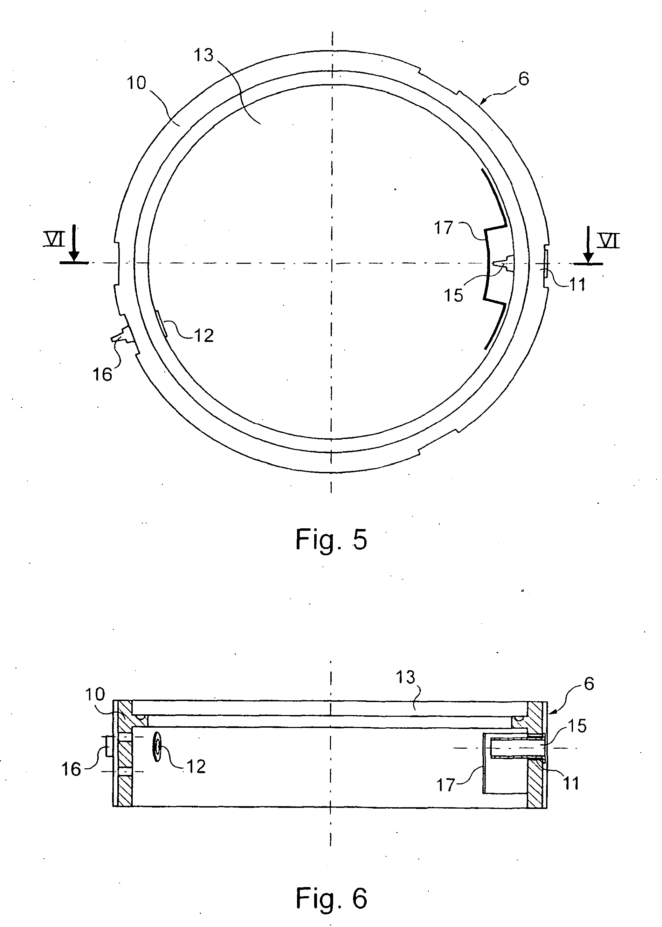

Sur les figures 5 et 6, le corps 10 du boîtier 6 est représenté avec un joint souple 15, 16 unidirectionnel de type « bec de canard » monté dans chacun des orifices d'injection 11 et d'échappement 12. Ce type de joint souple a une fonction de clapet antiretour permettant de faire circuler un gaz par l'orifice dans un sens, tout en empêchant la circulation du gaz en sens contraire.

En référence à la figure 5, l'orifice d'injection 11 est ainsi muni d'un joint bec de canard 15 tourné vers l'intérieur du corps 10 (c'est-à-dire autorisant seulement l'entrée du gaz dans le corps 10) et l'orifice d'échappement 12 est muni d'un joint bec de canard d'échappement 16 tourné vers l'extérieur du corps 10 (c'est-à-dire autorisant seulement la sortie du gaz contenu dans le corps 10).

Le corps 10 comporte de plus un déflecteur 17 fixé sur sa paroi interne en vis-à-vis du joint bec de canard d'injection 15 (voir figures 5 et 6). Ce déflecteur 17 contribue à la diffusion du gaz entrant par l'orifice d'injection 11 à l'intérieur du corps 10, en cassant le jet de gaz pour ne pas créer de turbulences directement sur la lentille.

En référence aux figures 3 et 4, le boîtier 6 est monté sur le socle 9 par l'intermédiaire d'une charnière 18 de sorte que l'enceinte étanche formée par le boîtier 6 et le socle 9 puisse être ouverte et fermée.

Deux aimants 19 montés sur le corps 10 sont adaptés à coopérer avec des pattes métalliques 20 montées sur la tranche du socle 9 pour verrouiller la fermeture de l'enceinte.

Les aimants 19 peuvent être remplacés par tout autre moyen de maintien tel que, par exemple, des pinces de type pinces sauterelles.

Un joint torique 21 est de plus disposé sur la périphérie du socle 9 pour assurer un contact étanche entre le boîtier 6 et le socle 9.

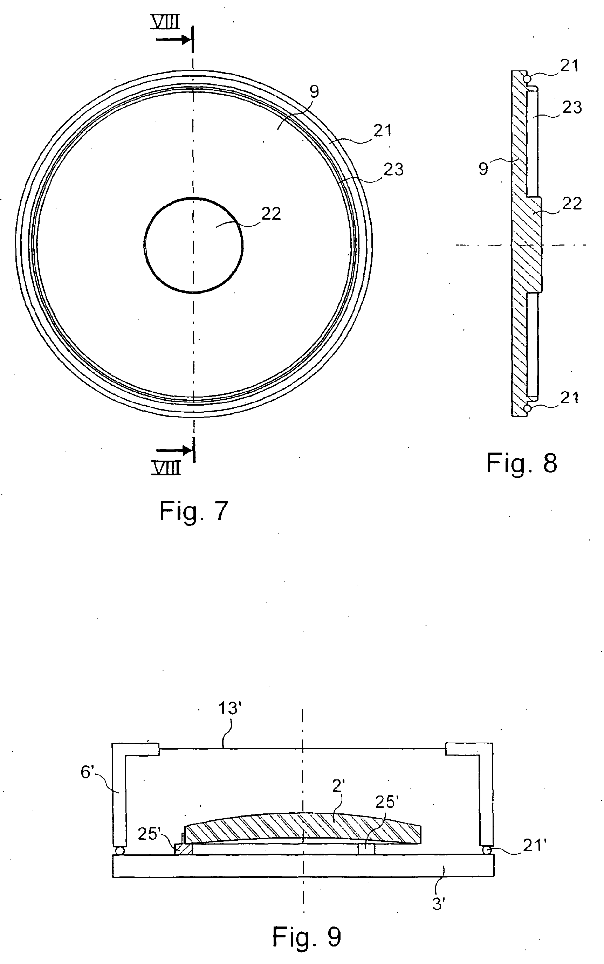

En référence aux figures 7 et 8, le socle 9 est formé d'un disque de même diamètre que le corps cylindrique 10 et comportant un pion central 22 saillant ainsi qu'un rebord circulaire 23 permettant de bien positionner le corps cylindrique 10 contre le joint torique 21.

Le pion central 22 permet la mise en position du support 3 de la lentille ophtalmique 2 sur le socle 9. Ce support 3 est un support classique permettant de maintenir une lentille ophtalmique pendant la pose d'un revêtement fluide, avec entraînement en rotation de la lentille ou non, et comportant une jupe circulaire 24 (voir figure 4) d'un diamètre légèrement supérieur au pion central 22. Le support 3 peut ainsi être emboité sur le pion central 22 de sorte que, dans le présent exemple, le centre du disque constituant le support 3 coïncide avec le centre du socle 9. Le support 3 est, dans le présent exemple, muni de trois plots 25 assurant le maintien de la lentille ophtalmique 2 par sa tranche.

Le boîtier 6 et le socle 9 des figures 2 à 8 sont ainsi adaptés à former une enceinte étanche, autonome et individuelle, pour une lentille ophtalmique 2.

En variante, l'enceinte étanche peut être constituée par la coopération directe d'un boîtier avec le support de la lentille ophtalmique. La figure 9 illustre une telle variante. Un boîtier 6' comportant une fenêtre 13' est adapté à être maintenu contre un joint torique 21', lui-même maintenu contre le support 3' portant une lentille ophtalmique 2' grâce à trois plots 25'. Le boîtier 6' est assujetti au support 3' par l'intermédiaire d'aimants ou de tout autre dispositif connu (non représentés sur la figure 9) tel que, par exemple, des pinces sauterelles.

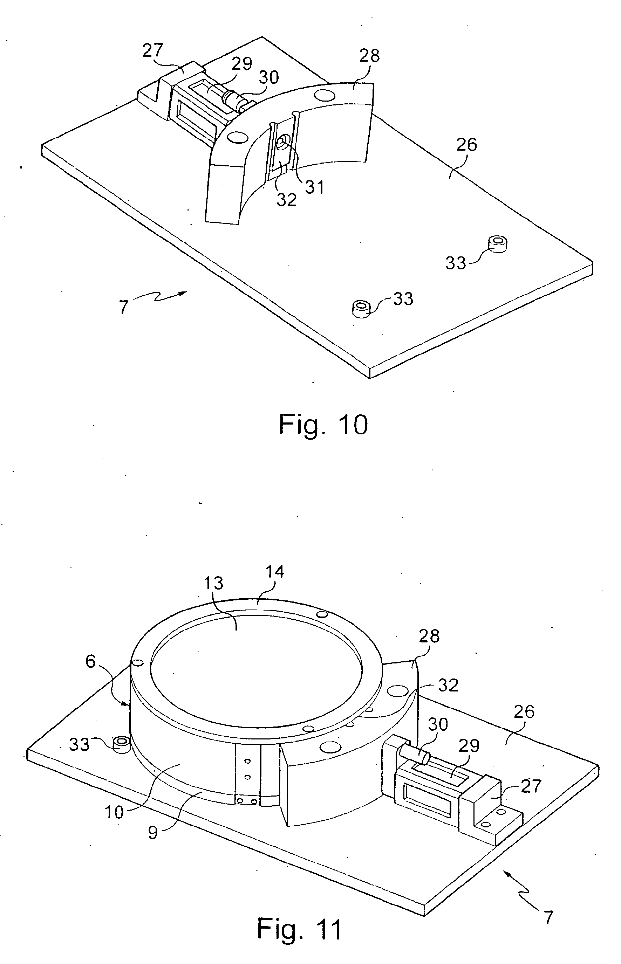

Les figures 10 et 11 représentent schématiquement le poste d'injection 7 de la figure 1.

Sur la figure 10, le poste d'injection 7 comporte un plateau 26 sur lequel est montée une butée 27 sur laquelle s'appuie un organe d'injection 28 par l'intermédiaire d'une cale 29.

L'organe d'injection 28 a une forme d'arc de cercle correspondant à la forme externe du corps 10 du boîtier 6 et comporte un raccord 30 relié à une bouche d'injection 31 débouchant sur une surface 32 en saillie par rapport au reste de l'organe d'injection. La bouche d'injection 31 est adaptée à coopérer avec les joints bec de canard 15, 16.

Le plateau 26 comporte également deux pions de maintien 33 disposés en vis-à-vis de l'organe d'injection 28.

La figure 11 représente une enceinte étanche formée du boîtier 6 et du socle 9 montée dans le poste d'injection 7. Le corps 10 du boîtier 6 est maintenu entre les pions de maintien 33 et l'organe d'injection 28. La surface en saillie 32 permet à la bouche d'injection 31 d'être comprimée contre le joint bec de canard 15 d'injection.

Le raccord 30 est prévu pour être branché sur un tuyau menant à une source de gaz inerte (non représentée), par exemple de l'azote. Les éléments qui viennent d'être décrits fonctionnent de la manière indiquée ci-après.

En référence à la figure 1, l'installation pour le revêtement de la lentille ophtalmique comporte, après le poste de dépose 1 qui est classique, un poste d'association 5 dans lequel le support 3 muni de la lentille ophtalmique 2 est mis en position sur le pion central 22 du socle 9.

Le boîtier 6 est ensuite refermé et verrouillé grâce aux aimants 19 pour former une enceinte étanche. Selon la variante de la figure 9, le boîtier 6' est directement monté sur le support 3' de la lentille ophtalmique 2', qui est prévu à cet effet pour former l'enceinte étanche.

Cette enceinte étanche, quel que soit son mode de réalisation, est ensuite amenée au poste d'injection 7 dans lequel elle est placée sur le plateau 26 de manière que le raccord 30 soit en mesure d'injecter un gaz inerte par le joint bec de canard d'admission 15 à l'intérieur de l'enceinte étanche.

L'injection de gaz inerte a ensuite lieu tandis que, parallèlement, le gaz contenu initialement dans l'enceinte étanche s'échappe par le joint bec de canard d'échappement 16.

Lorsque tout le gaz présent à l'intérieur de l'enceinte étanche a été remplacé par le gaz inerte, l'injection peut être stoppée et la lentille ophtalmique 2 est, à partir de ce moment, protégée par une enceinte étanche, autonome et individuelle, garantissant la présence d'une atmosphère inerte autour de la lentille ophtalmique 2.

L'enceinte étanche peut ensuite être extraite du procédé de fabrication, par exemple pour être stockée ou mise en attente, avant de passer enfin au poste de photopolymérisation 8 dans lequel une source lumineuse est adaptée à éclairer la lentille ophtalmique 2 à travers la fenêtre 13.

Des variantes de réalisation des éléments décrits peuvent être envisagées sans pour autant sortir du cadre de l'invention notamment, la charnière 18 est optionnelle pour relier le boîtier 6 et le socle 9, de même qu'une charnière peut être adaptée pour relier le boîtier 6' et le socle 9' dans la variante de la figure 9.

De même, le boîtier 6, le socle 9 et le support 3, 3' peuvent être réalisés dans un quelconque matériau, par exemple un alliage métallique ou un polymère injecté.

## Revendications

1. Installation adaptée au revêtement de lentilles ophtalmiques, comportant un poste (1) de dépose de revêtement, un poste (8) de polymérisation, des moyens (4) pour déplacer les lentilles ophtalmiques du poste de dépose (1) de revêtement au poste de polymérisation (8), et des moyens pour créer une atmosphère de gaz inerte autour des lentilles ophtalmiques, **caractérisé en ce que** les moyens pour créer une atmosphère de gaz inerte comportent des moyens (7) pour l'injection temporaire de gaz inerte ; et au moins un boîtier individuel (6) et autonome muni d'une fenêtre (13) et comportant des moyens de réception (22) d'un support (3) portant une lentille ophtalmique (2), et des moyens d'étanchéité (21) adaptés à former autour de la lentille ophtalmique (2) une enceinte étanche, cette enceinte comportant un organe d'admission antiretour (15) adapté à coopérer avec les moyens (7) pour l'injection temporaire de gaz inerte.

2. Installation selon la revendication 1, **caractérisée en ce que** l'enceinte comporte en outre un organe d'échappement antiretour (16).

3. Installation selon la revendication 2, **caractérisée en ce que** l'organe d'échappement antiretour comporte un joint (16) de type bec de canard.

4. Installation selon l'une des revendications 1 à 3, **caractérisée en ce que** l'organe d'admission antiretour comporte un joint (15) de type bec de canard.

5. Installation selon l'une des revendications 1 à 4, **caractérisée en ce que** les moyens (7) pour l'injection temporaire de gaz inerte comportent un raccord (30) relié à une source de gaz inerte.

6. Installation selon l'une des revendications 1 à 5, **caractérisée en ce que** l'enceinte est formée par l'association du boîtier (6) et d'un socle (9).

7. Installation selon la revendication 6, **caractérisée en ce que** les moyens de réception comportent un pion (22) disposé sur le socle (9).

8. Installation selon l'une des revendications 6 et 7, **caractérisée en ce que** les moyens d'étanchéité comportent un joint torique (21) disposé entre le boîtier (6) et le socle (9).

9. Installation selon l'une des revendications 6 à 8, **caractérisée en ce qu'**une charnière (18) est prévue pour articuler le boîtier (6) et le socle (9).

10. Installation selon l'une des revendications 6 à 9, **caractérisée en ce que** des aimants (19) sont prévus pour maintenir le boîtier (6') contre le socle (9').

11. Installation selon l'une des revendications 6 à 10, **caractérisée en ce que** des pinces sauterelles sont prévues pour maintenir le boîtier (6') contre le socle (9').

12. Installation selon l'une des revendications 1 à 5, **caractérisée en ce que** l'enceinte est formée par la coopération directe du boîtier (6) et du support (3).

13. Installation selon la revendication 12, **caractérisée en ce que** les moyens d'étanchéité comportent un joint (21') disposé entre le boîtier (6') et le support (3').

14. Installation selon l'une des revendications 1 à 13, **caractérisée en ce que** le boîtier (6) comporte un déflecteur (17) disposé en vis-à-vis de l'organe d'admission antiretour (15).

15. Installation selon l'une des revendications 1 à 14, **caractérisée en ce que** la fenêtre (13) est adaptée à filtrer les rayons UVB.

16. Installation selon l'une des revendications 1 à 15, **caractérisée en ce que** le support (3) portant la lentille ophtalmique (2) permet également de maintenir la lentille ophtalmique (2) au poste (1) de dépose de revêtement.

17. Procédé de revêtement d'une lentille ophtalmique, comportant les étapes suivantes :
- disposer une lentille ophtalmique (2) sur un support (3) ;
- déposer sur la lentille ophtalmique (2) un revêtement devant être polymérisé sous atmosphère contrôlée ;
- placer la lentille ophtalmique (2) dans une atmosphère de gaz inerte ;
- polymériser ledit revêtement ;
**caractérisé en ce que** l'étape de disposer la lentille ophtalmique (2) dans une atmosphère de gaz inerte est réalisée selon les étapes suivantes :
- associer le support (3) à un boîtier (6) individuel et autonome muni d'une fenêtre (13) et comportant : des moyens (22) de réception d'un support (3) portant une lentille ophtalmique (2), et des moyens d'étanchéité (21) pour former autour de la lentille ophtalmique (2) une enceinte étanche, cette enceinte comportant un organe d'admission antiretour (15) adapté à coopérer avec des moyens pour l'injection temporaire de gaz inerte ;
- brancher l'enceinte à des moyens (7) pour l'injection temporaire de gaz inerte par l'intermédiaire de l'organe d'admission antiretour (15) ;
- injecter du gaz inerte dans l'enceinte ;
- débrancher l'enceinte des moyens (7) pour l'injection temporaire de gaz inerte.

## Claims

1. Installation adapted to the coating of ophthalmic lenses, including a coating deposition station (1), a polymerization station (8), means (4) for moving the ophthalmic lenses from the coating deposition station (1) to the polymerization station (8), and means for creating an inert gas atmosphere around the ophthalmic lenses, **characterized in that** the means for creating an inert gas atmosphere include means (7) for the temporary injection of inert gas; and at least one individual and autonomous casing (6) provided with a window (13) and including receiving means (22) for a support (3) carrying an ophthalmic lens (2), and sealing means (21) adapted to form around the ophthalmic lens (2) a sealed enclosure, that enclosure including a non-return inlet member (15) adapted to cooperate with the means (7) for the temporary injection of inert gas.

2. Installation according to claim 1, **characterized in that** the enclosure further includes a non-return exhaust member (16).

3. Installation according to claim 2, **characterized in that** the non-return exhaust member includes a duckbill type seal (16).

4. Installation according to any one of claims 1 to 3, **characterized in that** the non-return inlet member includes a duckbill type seal (15).

5. Installation according to any one of claims 1 to 4, **characterized in that** the means (7) for the temporary injection of inert gas include a connector (30) connected to a source of inert gas.

6. Installation according to any one of claims 1 to 5, **characterized in that** the enclosure is formed by the association of the casing (6) and a base (9).

7. Installation according to claim 6, **characterized in that** the receiving means include a boss (22) disposed on the base (9).

8. Installation according to either of claims 6 and 7, **characterized in that** the sealing means include an O-ring (21) disposed between the casing (6) and the base (9).

9. Installation according to any one of claims 6 to 8, **characterized in that** a hinge (18) is provided for articulating the casing (6) and the base (9).

10. Installation according to any one of claims 6 to 9, **characterized in that** magnets (19) are provided for holding the casing (6') against the base (9').

11. Installation according to any one of claims 6 to 10, **characterized in that** toggle clip type clamps are provided for holding the casing (6') against the base (9').

12. Installation according to any one of claims 1 to 5, **characterized in that** the enclosure is formed by the direct cooperation of the casing (6) and the support (3).

13. Installation according to claim 12, **characterized in that** the sealing means include a seal (21') disposed between the casing (6') and the support (3').

14. Installation according to any one of claims 1 to 13, **characterized in that** the casing (6) includes a deflector (17) disposed facing the non-return inlet member (15).

15. Installation according to any one of claims 1 to 14, **characterized in that** the window (13) is adapted to filter UVB rays.

16. Installation according to any one of claims 1 to 15, **characterized in that** the support (3) carrying the ophthalmic lens (2) also holds the ophthalmic lens (2) at the coating deposition station (1).

17. Method of coating an ophthalmic lens, including the following steps:
- disposing an ophthalmic lens (2) on a support (3);
- depositing on the ophthalmic lens (2) a coating that has to be polymerized in a controlled atmosphere;
- placing the ophthalmic lens (2) in an inert gas atmosphere;
- polymerising said coating;
**characterized in that** the step of disposing the ophthalmic lens (2) in an inert gas atmosphere is effected by means of the following steps:
- associating the support (3) with an individual and autonomous casing (6) provided with a window (13) and including: means (22) for receiving a support (3) carrying an ophthalmic lens (2), and sealing means (21) for forming around the ophthalmic lens (2) a sealed enclosure, that enclosure including a non-return inlet member (15) adapted to cooperate with means for the temporary injection of inert gas;
- connecting the enclosure to means (7) for the temporary injection of inert gas via the non-return inlet member (15);
- injecting inert gas into the enclosure;
- disconnecting the enclosure from the means (7) for the temporary injection of inert gas.

## Patentansprüche

1. Vorrichtung geeignet zur Beschichtung von ophtalmischen Linsen, umfassend eine Beschichtungsauftragstation (1), eine Polymerisationsstation (8), Mittel (4) um die ophtalmischen Linsen von der Beschichtungsauftragstation (1) zur Polymerisationsstation (8) zu bringen, und Mittel um eine Atmosphäre von inertem Gas um die ophtalmischen Linsen herum zu schaffen, **dadurch gekennzeichnet, dass** die Mittel zur Schaffung der Atmosphäre von inertem Gas Mittel (7) zur temporären Injektion von inerten Gas umfassen; und zumindest ein einzelnes und autonomes Gehäuse (6), welches mit einem Fenster (13) ausgestattet ist und Mittel zur Aufnahme (22) eines Trägers (3) der eine ophtalmische Linse (2) trägt umfasst, und Mittel zur Abdichtung (21) dazu geeignet, um um die ophtalmische Linse (2) eine dichte Umhüllung zu bilden, wobei diese Umhüllung eine Rückschlageinbringeinrichtung (15) umfasst, welche dazu geeignet ist mit den Mitteln (7) zur temporären Injektion des inerten Gases zusammen zu wirken.

2. Vorrichtung nach Anspruch 1, **dadurch gekennzeichnet, dass** die Umhüllung weiterhin eine Rückschlagentlüftungseinrichtung (16) umfasst.

3. Vorrichtung nach Anspruch 2, **dadurch gekennzeichnet, dass** die Rückschlagentlüftungseinrichtung eine Verbindungsstelle (16) vom Typ eines Entenschnabels umfasst.

4. Vorrichtung nach einem der Ansprüche 1 bis 3, **dadurch gekennzeichnet, dass** die Rückschlageinbringeinrichtung eine Verbindungsstelle (15) vom Typ eines Entenschnabels umfasst.

5. Vorrichtung nach einem der Ansprüche 1 bis 4, **dadurch gekennzeichnet, dass** die Mittel (7) zur temporären Injektion des inerten Gases eine Verbindung (30) umfasst, die mit einer Quelle von inertem Gas verbunden ist.

6. Vorrichtung nach einem der Ansprüche 1 bis 5, **dadurch gekennzeichnet, dass** die Umhüllung durch das Zusammenwirken des Gehäuses (6) und einem Sockel (9) gebildet wird.

7. Vorrichtung nach Anspruch 6, **dadurch gekennzeichnet, dass** die Mittel zur Aufnahme einen Absatz (22) umfassen der an dem Sockel (9) angeordnet ist.

8. Vorrichtung nach einem der Ansprüche 6 oder 7, **dadurch gekennzeichnet, dass** die Mittel zur Abdichtung einen torische Dichtung bzw. einen O-Ring (21) umfassen, welcher zwischen dem Gehäuse (6) und dem Sockel (9) angeordnet ist.

9. Vorrichtung nach einem der Ansprüche 6 bis 8, **dadurch gekennzeichnet, dass** ein Scharnier (18) dazu vorgesehen ist um das Gehäuse (6) und den Sockel (9) an zu lenken.

10. Vorrichtung nach einem der Ansprüche 6 bis 9, **dadurch gekennzeichnet, dass** Magneten (19) dazu vorgesehen sind das Gehäuse (6') am Sockel (9') zu halten.

11. Vorrichtung nach einem der Ansprüche 6 bis 10, **dadurch gekennzeichnet, dass** Gelenkhebel- bzw. Schnappklemmen dazu vorgesehen sind das Gehäuse (6') am Sockel (9') zu halten.

12. Vorrichtung nach einem der Ansprüche 1 bis 5, **dadurch gekennzeichnet, dass** die Umhüllung durch die direkte Zusammenwirkung des Gehäuses (6) und des Trägers (3) gebildet wird.

13. Vorrichtung nach Anspruch 12, **dadurch gekennzeichnet, dass** die Mittel zur Abdichtung eine Dichtung (21') umfassen die zwischen dem Gehäuse (6') und dem Träger (3') angeordnet ist.

14. Vorrichtung nach einem der Ansprüche 1 bis 13, **dadurch gekennzeichnet, dass** das Gehäuse (6) einen Ablenker (17) umfasst, welcher gegenüberliegend der Rückschlageinbringeinrichtung (15) angeordnet ist.

15. Vorrichtung nach einem der Ansprüche 1 bis 14, **dadurch gekennzeichnet, dass** das Fenster (13) dazu geeignet ist UVB Strahlung zu filtern.

16. Vorrichtung nach einem der Ansprüche 1 bis 15, **dadurch gekennzeichnet, dass** der Träger (3), der eine ophtalmische Linse (2) trägt es genauso erlaubt, die ophtalmische Linse (2) in der Beschichtungsauftragstation (1) zu halten.

17. Verfahren zur Beschichtung einer ophtalmischen Linse umfassend die nachfolgenden Schritte von:
- Anordnen einer ophtalmischen Linse (2) an einem Träger (3);
- Aufbringen an der ophtalmischen Linse (2) einer Beschichtung vor der Polymerisation unter einer kontrollierten Atmosphäre;
- Plazieren der ophtalmischen Linse (2) in einer Atmosphäre von inertem Gas;
- Polymerisieren der Beschichtung;
**dadurch gekennzeichnet, dass** der Schritt des Anordnens der ophtalmischen Linse (2) in einer Atmosphäre von inertem Gas gemäß der nachfolgenden Schritte realisiert wird:
- Zuordnen des Trägers (3) mit einem einzelnen und autonomen Gehäuse (6), welches ein Fenster (13) aufweist und welches umfasst: Mittel (22) zur Aufnahme eines Trägers (3) der eine ophtalmische Linse (2) trägt, und Mittel zur Abdichtung (21), um um die ophtalmische Linse (2) eine dichte Umhüllung zu bilden, wobei diese Umhüllung eine Rückschlageinbringeinrichtung (15) umfasst, welche dazu geeignet ist, mit Mitteln zur temporären Injektion von inertem Gas zusammen zu wirken;
- Anschließen der Umhüllung mit den Mitteln (7) zur temporären Injektion von inerten Gas unter Zwischenschaltung der Rückschlageinbringeinrichtung (15);
- Injektion von inertem Gas in die Umhüllung;
- Abschließen der Umhüllung von den Mitteln (7) zur temporären Injektion von inertem Gas.
